# EUROPEAN PATENT APPLICATION

(11) **EP 4 677 986 A1**
(43) Date of publication of application: **14.01.2026**
(21) Application number: 25188918.4
(22) Date of filing: 11.07.2025
(51) Int. Cl.: A01D 33/00, A01D 33/10

(54) **AN AGRICULTURAL MACHINE COMPRISING A MOVABLE BUNKER**

(30) Priority: 11.07.2024 BE 202405449
(71) Applicant: AVR NV, 8800 Roeselare (BE)
(72) Inventor: DECANCQ, Janick, 8770 Ingelmunster (BE); BOUDRY, Ward, 8980 Beselare (BE); VANHOUTTE, Michiel, 8953 Wijtschate (BE); LOGGHE, Andy, 8970 Poperinge (BE)
(74) Representative: De Clercq & Partners

(57) **Abstract**

An agricultural machine is described wherein the bunker (10) is arranged so as to be movable. The agricultural machine (1) furthermore comprises a movement mechanism (14, 16, 18)to cause a displacement of the bunker (10) which is smaller at the location of a supplying conveying device (200) along the transverse direction (D) than a predetermined threshold value, so that it is possible for the outlet side (210) of the supplying conveying device (200) to continue to reach into the bunker (10) while the bunker (10) is moving.

## Description

### Technical field

The relevant technical field relates to agricultural machines, in particular agricultural vehicles for performing operations on a field when harvesting by digging up plant products, such as tuberous crops, bulbous crops and/or root crops, such as for example potatoes, onions, carrots, sugar beet, fodder beet, ..., which are generally referred to as root crop products or root crop vegetables or root vegetables.

### Prior art

An agricultural machine for temporarily storing and unloading agricultural products is known, for example, from EP2674020A1. Such a potato harvester comprises a bunker for the temporary storage of the harvested potatoes. These potatoes are supplied to the bunker by a supplying conveying device. In this case, the outlet side of the supplying conveying device reaches into the bunker. This is advantageous in order to limit the drop height of the potatoes when they are being supplied to the bunker, in particular when the bunker has only been filled to a limited degree. This helps to reduce damage to the harvested potatoes resulting from an excessive distance of the drop. The known agricultural machine furthermore also comprises a discharging conveying device for discharging a flow of potatoes from the bunker. This discharging conveying device makes it possible, for example, to transfer the potatoes in the bunker of the potato harvester to a cart or a trailer or another suitable transport element for the harvested potatoes. This transfer operation takes place, for example, when the bunker has been filled to a sufficient degree and/or when a cart or trailer is available for receiving the harvested potatoes for further transportation, for example to a storage facility or processing installation.

However, there is a need for increasing the capacity of the bunker. Furthermore, there is also a need for filling carts, trailers, containers, ... of ever increasing capacity in an efficient manner. Such carts, containers, ... have higher walls and/or are wider and cause problems with regard to even filling, loss of agricultural products when the supply device is barely able to reach over the edge, increased risk of drop damage when the supply device cannot reach sufficiently far into the cart, container, ... etc. There is therefore a need for an agricultural machine which can overcome these drawbacks.

### Summary

According to a first aspect, an agricultural machine is provided which is configured to temporarily store and unload root crop products, wherein the agricultural machine has a transverse direction transversely to the direction of travel of the agricultural machine, and wherein the agricultural machine furthermore comprises:
- a bunker for at least temporarily storing the agricultural products,
- a supplying conveying device for supplying a flow of agricultural products to the bunker, wherein the supplying conveying device is provided with an outlet side which reaches into the bunker;
- a discharging conveying device for discharging a flow of agricultural products from the bunker,
CHARACTERIZED IN THAT
the bunker is arranged so as to be movable, and wherein the agricultural machine furthermore comprises a movement mechanism, wherein the movement mechanism acts on the movable bunker in order to cause a displacement of the bunker which at the location of the supplying conveying device along the transverse direction is smaller than a predetermined threshold value, so that it is possible that the outlet side of the supplying conveying device can continue to reach into the bunker during movement of the bunker (10) between two limit positions.

In this way, it is possible to position the bunker in a more optimal manner for the various operating modes of the agricultural machine, while it still remains possible to supply the agricultural products to the bunker at a reduced risk of damage to the agricultural products caused by an excessive drop height.

According to a subsequent and/or optional embodiment, an agricultural machine is provided, wherein the movable bunker comprises an inlet opening via which the supplying conveying device reaches into the bunker at the location of the outlet side, and wherein the inlet opening is provided with two upright edges on either side of the supplying conveying device, and wherein the displacement of the upright edges with respect to the supplying conveying device along the transverse direction during the movement of the bunker is smaller than or equal to the threshold value.

This limited displacement along the transverse direction of the upright edges of the inlet opening makes it possible for the supplying conveying device to remain positioned in, or also through, this inlet opening, while the movable bunker is being moved by means of the movement mechanism, preferably between the two limit positions of the movable bunker. This makes efficient repositioning of the bunker possible, for example when switching from a harvesting configuration for performing a harvesting operation in a field to a transport configuration for moving the agricultural machine on public roads.

According to a subsequent and/or optional embodiment, an agricultural machine is provided in which the threshold value and/or the maximum distance between an upright edge of the inlet opening and an adjacent side of the supplying conveying device is equal to or smaller than one or more of the following dimensions:
- 10% of the width of the inlet opening, preferably 5% of the width of the inlet opening;
- 10% of the width of the supplying conveying device, preferably 5% of the width of the supplying conveying device at the location of the inlet opening;
- 15 cm, preferably 10 cm, for example 5 cm;
- the minimum width of the desired agricultural product to be harvested.

In this way, it is possible for the inlet opening of the bunker to closely adjoin the supplying conveying device, which is advantageous in order, for example, to prevent agricultural goods from being discharged while the bunker is being filled, and/or the forces acting on movable elements from closing off the inlet opening of the bunker underneath a supplying conveying device which is movable up and down.

According to a subsequent embodiment, an agricultural machine is provided wherein the supplying conveying device is movable up and down at the location of the inlet opening, and wherein the minimum distance between an upright edge of the inlet opening and an adjacent side of the supplying conveying device in every position of the supplying conveying device which is movable up and down and in every position of the movable bunker is greater than or equal to one or more of the following dimensions:
- 1mm;
- 1cm.

This makes it possible for the supplying conveying device which is movable up and down and the movable bunker to move freely, while the supplying conveying device remains in the inlet opening, which results in an optimum and efficient configuration and adjustment of the configuration of the agricultural machine.

According to a subsequent and/or optional embodiment, an agricultural machine is provided, wherein the movable bunker comprises an outlet opening via which the flow of agricultural products is discharged from the bunker by means of the discharging conveying device, and wherein the movement mechanism acts on the movable bunker in order to cause a displacement of the bunker which, at the location of the bottom of the outlet opening along the transverse direction, is greater than:
- the displacement along the transverse direction of the bunker at the location of the supplying conveying device;
- 5 cm, preferably 10 cm, for example 15 cm; and/or
- the predetermined threshold value.

In this way, the outlet opening and/or the discharging conveying device can be moved closer to the cart, container, ... into which the agricultural products have to be transferred from the bunker during an unloading operation. This offers the advantage, inter alia, that for example larger and/or higher carts, containers can be filled in a more efficient manner during such an unloading operation, and that the drop damage at the location of the downstream end of the discharging conveying device can be limited due to the fact that this end may be positioned, for example, in a more optimal manner with respect to the container or cart into which the agricultural products are unloaded in a way in which the drop height of the flow of agricultural products which is being unloaded into the cart or container is limited.

According to a subsequent and/or optional embodiment, an agricultural machine is provided, wherein:
- the movement mechanism is configured to move the movable bunker between a first limit position suitable for travelling on a public road and a second limit position for harvesting by digging up, storing and/or unloading agricultural goods on a field, wherein the bunker extends further along the transverse direction than in the first limit position;
- the discharging conveying device is configured to be moved between a folded-in position for putting the discharging conveying device away when the agricultural vehicle travels on public roads and a folded-out position for discharging the flow of agricultural goods;
- in the first limit position, when they are in the folded-in position, the bunker and the discharging conveying device meet the legal limits for the dimensions of an agricultural machine while travelling on a public road;
- in the second limit position, when they are in the folded-out position, the bunker and the discharging conveying device do not meet the legal limits for the dimensions of an agricultural machine while travelling on a public road; and/or
- wherein the discharging conveying device consists of at least two folding-out and folding-in parts, wherein:
   - in the folded-in position, at least one of the parts is at least partly situated in the bunker; and
   - in the folded-out position, the parts are situated at least partly outside the bunker (10).

In this way, the movement mechanism can position the movable bunker in an optimum way for transportation on the road, on the one hand, and for an agricultural operation on a field, on the other hand, in a way which allows the capacity of the bunker to be optimized in the process.

According to a subsequent and/or optional embodiment, an agricultural machine is provided in which the bunker comprises a bottom, wherein:
- the angle of inclination of the bottom of the bunker differs from the angle of inclination of the discharging conveying device;
- the angle of inclination of the discharging conveying device is at most 60°, preferably at most 45°, preferably at most 30°; and/or
- the difference between the angle of inclination of the bottom of the bunker and the angle of inclination of the discharging conveying device is at least 5°, preferably at least 10°.

In this way, the flow of agricultural goods can be discharged in an optimum manner via the discharging conveying device.

According to a subsequent and/or optional embodiment an agricultural machine is provided in which the movement mechanism comprises:
- a mechanism of rods and an actuator configured to move the mechanism of rods; and/or
- a mechanism of rods comprising at least a first movable rod and a second movable rod, wherein a first side of the first movable rod and a first side of the second movable rod are tiltably connected to the chassis of the agricultural machine, and wherein a second side of the first movable rod and a second side of the second movable rod are tiltably connected to the bunker; and an actuator, wherein the actuator is configured to move the bunker via the first and second movable rods.

In this way, the movement mechanism can be produced in a simple and reliable way.

According to a subsequent and/or optional embodiment, an agricultural machine is provided, wherein the agricultural machine furthermore comprises limiting elements which are configured for:
- limiting the forward and/or backward movement of the bunker along the direction of travel of the agricultural machine; and
- allowing a movement of the bunker between two limit positions along the transverse direction.

In this way, a stable movable bunker may be produced.

According to a subsequent and/or optional embodiment, an agricultural machine is provided, wherein the limiting elements comprise a plastic block, or consist of a plastic block, which is fixedly connected to the frame of the agricultural machine on one side and is brought into close contact with the bunker on the other side, or vice versa, in order thus to limit a forward and/or backward movement of the bunker along the direction of travel.

This makes it possible to produce the limiting means in a simple, reliable and damping manner, which is advantageous in the case of a movable bunker which may be subjected to high forces acting upon it, for example when moving the agricultural vehicle.

According to a subsequent and/or optional embodiment, an agricultural machine is provided, wherein:
- the movable bunker comprises an outlet opening, wherein the most downstream part of the bottom of the bunker forms the bottom of the outlet opening; and
- the discharging conveying device is provided with an inlet side and an outlet side, wherein the inlet side of the discharging conveying device is arranged at the location of the bottom of the outlet opening of the bunker; and
- a cleaning zone is provided between the bottom of the outlet opening and the inlet side of the discharging conveying device for at least partly removing soil, leaves and/or undesired elements from the flow of agricultural products.

In this way, the amount of undesirable material is reduced and the removed undesirable material is carried away on the outer side of the agricultural machine, thus preventing the undesirable materials from accumulating on components of the agricultural machine situated underneath and/or from causing a nuisance.

According to a subsequent and/or optional embodiment, an agricultural machine is provided, wherein the cleaning zone comprises and/or consists of one or more of the following elements:
- one or more cleaning elements;
- one or more cleaning rollers;
- one or more cleaning rollers having a changing diameter along the longitudinal direction and/or cleaning elements fitted thereto;
- one or more sieve elements;
- one or more sieve openings;
- one or more wiping fingers;
- one or more wiping fingers configured for guiding soil, leaves and/or undesirable elements in the direction of one or more cleaning rollers, sieve elements and/or sieve openings.
- one or more tumble steps configured to cause the flow of agricultural products to perform a tumbling movement in order to at least partly loosen and/or remove soil, leaves and/or undesirable elements, and/or
wherein the cleaning zone is configured in such a way that:
- when the bunker is in a limit position for harvesting by digging up, storing and/or unloading agricultural goods on a field, the inlet side of the discharging conveying device and/or at least a portion of the cleaning zone is situated along the transverse direction on the outer side of a side wall of the agricultural machine situated underneath the former;
- when the bunker is in a limit position for travelling on a public road and/or when the discharging conveying device is in a position where it is at least partly folded into the bunker, the cleaning zone does not extend further along the transverse direction than a side wall of the agricultural machine situated underneath it.

In this way, the undesirable material can be removed in an optimum manner without causing any inconvenience to other elements of the agricultural machine.

According to a subsequent and/or optional embodiment, an agricultural machine is provided, wherein the movable bunker is furthermore provided with at least one raisable side wall and at least one actuator which is operatively connected to the at least one raisable side wall in order to temporarily raise the height of at least a portion of the at least one raisable side wall.

This makes it possible to increase the storage capacity when the bunker is in the tilted position.

According to a subsequent and/or optional embodiment, an agricultural machine is provided, wherein:
- the at least one raisable side wall comprises a tiltable unit, wherein the tiltable unit comprises:
   - a first side panel which is arranged so as to be tiltable on a first side of the bunker in which an inlet opening is provided for the supplying conveying device;
   - a second side panel which is arranged so as to be tiltable on a second side of the bunker opposite the first side; and
   - a third side panel which is positioned on the side of the bunker which is opposite the outlet opening of the bunker, wherein the third side panel connects the first side panel and the second side panel at their end facing away from the tilting point; and/or
   - a fourth side panel which is arranged so as to be tiltable on the second side of the bunker, wherein the tilting point of the fourth side panel is provided closer to the outlet opening of the bunker than the tilting point of the second side panel, and/or wherein the fourth side panel is coupled to the second side panel in order to at least partly move upwards together;
- the at least one actuator comprises or consists of one or more of the following elements: a pneumatic actuator, a gas spring, a hydraulic actuator, an electrical actuator, a linear actuator, a rotating actuator, an electrical motor;
- the at least one actuator is configured to move the at least one raisable side walls up and/or down; and/or
- the discharging conveying device is foldable and connected to the at least one raisable side walls in such a way that, when the latter is in a raised position, the at least one raisable side walls are lowered when the discharging conveying device is being folded in.

This makes it possible to achieve an increase in capacity in an efficient and reliable way.

According to a second aspect, a method is provided for moving a movable bunker of the agricultural machine according to the first aspect, wherein the method comprises the following step:
- the movement mechanism acts on the movable bunker in order to cause a displacement of the bunker which at the location of the supplying conveying device along the transverse direction is smaller than a predetermined threshold value, so that it is possible for the outlet side of the supplying conveying device to continue to reach into the bunker during movement of the the bunker between two limit positions.

In this way, an efficient supply with a limited risk of drop damage can be achieved.

It will be clear that alternatives and combinations of one or more of the above-described embodiments are possible. In particular, embodiments of an aspect having similar characterizing features to the embodiments of another aspect are possible.

### Brief description of the figures

Below, some exemplary embodiments will be described by way of example with reference to the following figures, in which:
- Fig. 1 shows a plan view of an embodiment of an agricultural machine in a position suitable for travelling on a public road;
- Fig. 2 shows a cross section along line II-II in Fig. 1;
- Fig. 3 shows a plan view of the embodiment from Fig. 1 in another position, suitable for harvesting by digging up agricultural products;
- Fig. 4 shows a cross section along line IV-IV in Fig.2;
- Fig. 5 shows a fragment from Fig. 1 on an enlarged scale;
- Fig. 6 shows a similar fragment from Fig. 3 on an enlarged scale;
- Fig. 7 shows a cross section of Fig. 1 along line VII-VII;
- Fig. 8 shows a cross section of Fig. 3 along line VIII-VIII;
- Fig. 9 shows a similar cross section as that from Fig. 7, with the discharging conveying device in the folded-in position;
- Fig. 10 shows a cross section along line X-X in Fig. 1, but with the discharging conveying device in the folded-in position;

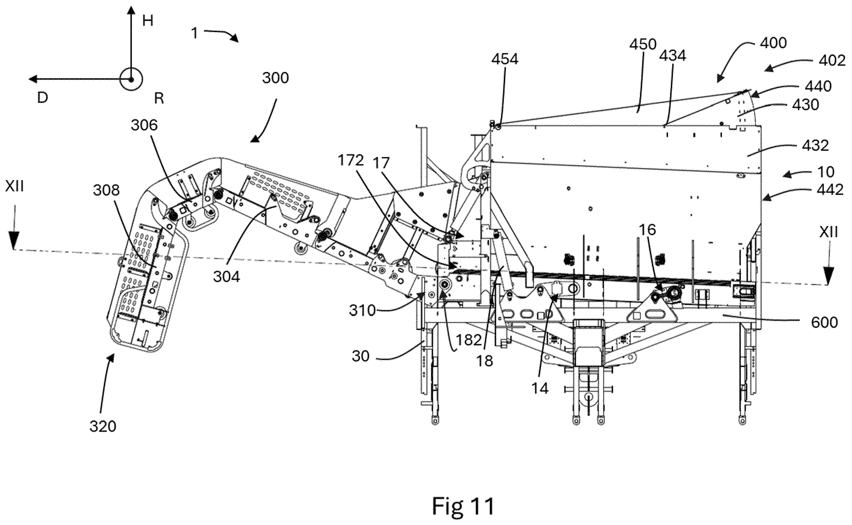

- Fig. 11 shows a cross section along line IX-IX in Fig. 1;
- Fig. 12 shows a cross section along line XII-XII in Fig. 11;
- Figs. 12A, 12B and 12C illustrate the fragments A, Band C in Fig. 12 on an enlarged scale;
- Fig. 13 shows a diagrammatic representation of a view similar to that of Fig. 7; and
- Fig. 14 shows a diagrammatic representation of a view similar to that of Fig. 8.

### Detailed description

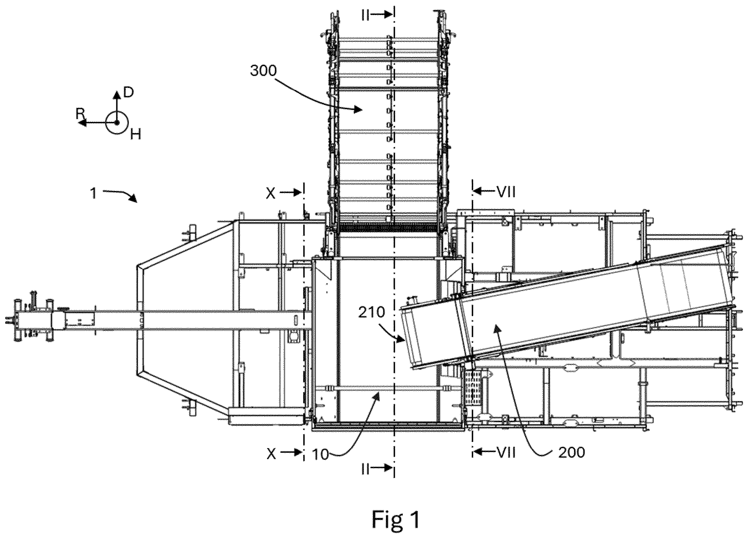

Fig. 1 shows an embodiment of an agricultural machine 1 configured to temporarily store and unload root crop products. According to the illustrated exemplary embodiment, the agricultural machine 1 is a towed potato harvester, but it will be clear that alternative embodiments are possible, such as for example a towed and/or autonomous potato harvester, beet harvester, ... or any other suitable agricultural vehicle for performing operations on a field when harvesting by digging up plant products, such as tuberous crops, bulbous crops and/or root crops, such as for example potatoes, onions, carrots, sugar beet, fodder beet, ..., which are generally referred to as root crop products or root crop vegetables or root vegetables .

As is illustrated in Fig. 1, the agricultural machine has a transverse direction D transverse to the direction of travel R of the agricultural machine 1. In this case, it will be clear that the transverse direction D and the direction of travel R are situated in a horizontal or essentially horizontal plane, when the terrain on which the agricultural machine travels is horizontal or essentially horizontal. Furthermore, as is indicated, there is also the height direction H which is transversely, or essentially transversely, to the plane of the transverse direction D and the direction of travel R. When the agricultural machine travels across sloping terrain, then it will be clear that the transverse direction D and the direction of travel R of the agricultural machine are in a plane which is parallel with, or essentially parallel with, this terrain, and the height direction is transversely to, or essentially transversely, to the terrain. In other words, a movement of the agricultural machine 1 along the direction of travel R is typically indicated by the term forward, and a movement opposed to the direction of travel R by the term backward, and the front side and the rear side of the agricultural machine are denoted by corresponding terms. On either side along the transverse direction D are the so-called left-hand side and right-hand side of the agricultural machine 1.

As can be seen in Fig. 1, the embodiment of the agricultural machine 1 comprises a bunker 10. As is known by a person skilled in the art, this bunker acts as an at least temporary store for the agricultural products. According to the illustrated exemplary embodiment, this means, for example, a temporary store or buffer for harvested potatoes. For example, until a certain filling level of the bunker has been reached, or until a suitable cart or trailer or another suitable transport element becomes available for transferring the root crop products, for example for onward transportation to a storage location or processing plant.

As can furthermore be seen in Fig. 1, the embodiment of the agricultural machine 1 also comprises a supplying conveying device 200. This supplying conveying device 200, also referred to as bunker conveyor belt, ensures that a flow of agricultural products reaches the bunker. To this end, the supplying conveying device 200 comprises suitable conveying elements, such as for example a conveyor belt, a web conveyor, a sieve belt, ... , in order to take the agricultural products to the bunker 10. According to the illustrated exemplary embodiment, the supplying conveying device 200 is, for example, a suitable conveyor belt or roller conveyor which supplies the harvested potatoes to the bunker 10. As can be seen, in this case the supplying conveying device 200 is provided with an outlet side 210 which reaches into the bunker 10. As can be seen, this means that the downstream end 210, also referred to as outlet side 210, of for example the conveyor belt or roller conveyor reaches into the bunker 10. This means that, as is illustrated in Fig. 1, according to the plan view, the downstream end 210 of the supplying conveying device 200 is situated inside the circumference of the bunker 10. As is furthermore described, this also means that the downstream end 210 of the supplying conveying device 200 can enter into the volume of the bunker, in which the agricultural products are collected, and that this downstream end 210 is configured in such a way that it can be positioned at a lower level than the top edge of the bunker 10.

Furthermore, the illustrated embodiment of the agricultural machine 1 comprises a discharging conveying device 300 for discharging a flow of agricultural products from the bunker 10. Such a discharging conveying device 300 comprises suitable conveying elements, such as for example a conveyor belt, a web conveyor, a sieve belt, ... or any suitable combination thereof in order to transport the agricultural products away from the bunker 10. The discharging conveying device 300 thus ensures that the agricultural products from the bunker 10 can, for example, be transferred to a cart, trailer, ... to be transported onwards and/or stored elsewhere.

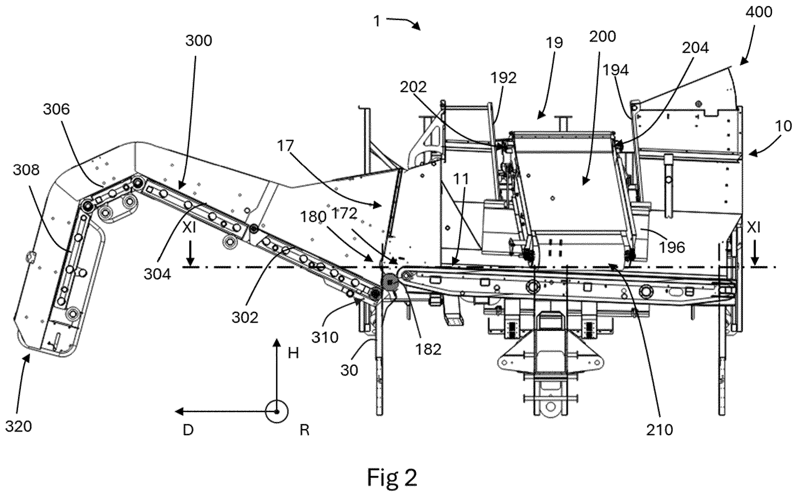

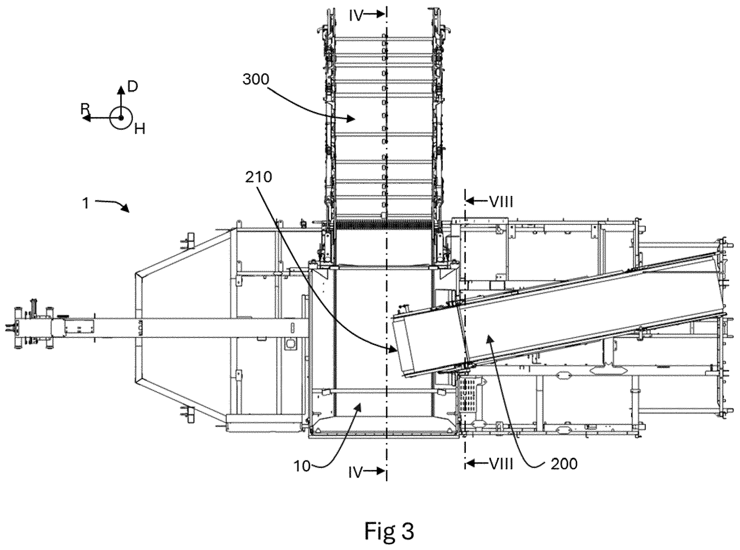

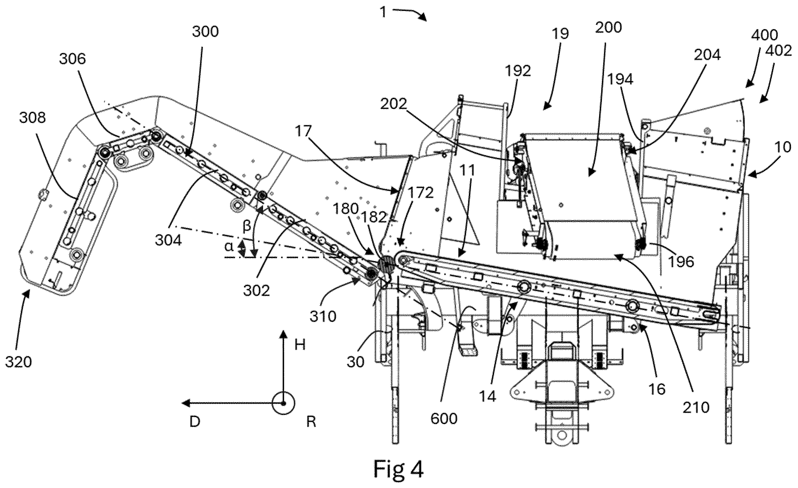

As is illustrated in Fig. 1 to Fig. 4 and will be described below in more detail, the bunker 10 is arranged so as to be movable. To this end, the agricultural machine 1 comprises a movement mechanism 14, 16, 18 which will also be described below in more detail. The movement mechanism is configured to act upon the movable bunker 10 in order to cause a displacement of the bunker 10 which, at the location of the supplying conveying device 200 along the transverse direction D, is smaller than a predetermined threshold value. As can be seen in Fig. 1 to Fig. 4, the movement mechanism is in this case configured in such a way that it is possible for the outlet side 210 of the supplying conveying device 200 to remain positioned in the bunker 10 while the bunker 10 is being moved between two limit positions. In other words, when the bunker 10 is being moved, for example, from the position illustrated in Figs. 1 and 2 to the position of the bunker illustrated in Figs. 3 and 4, or vice versa, the outlet side 210 of the supplying conveying device 200 can remain in the bunker 10, as illustrated, due to the small displacement along the transverse direction D at the location where the supplying conveyor belt 200 enters the bunker 10 via an inlet opening 19 in an upright wall 190 of the bunker 10, as will be described below in more detail.

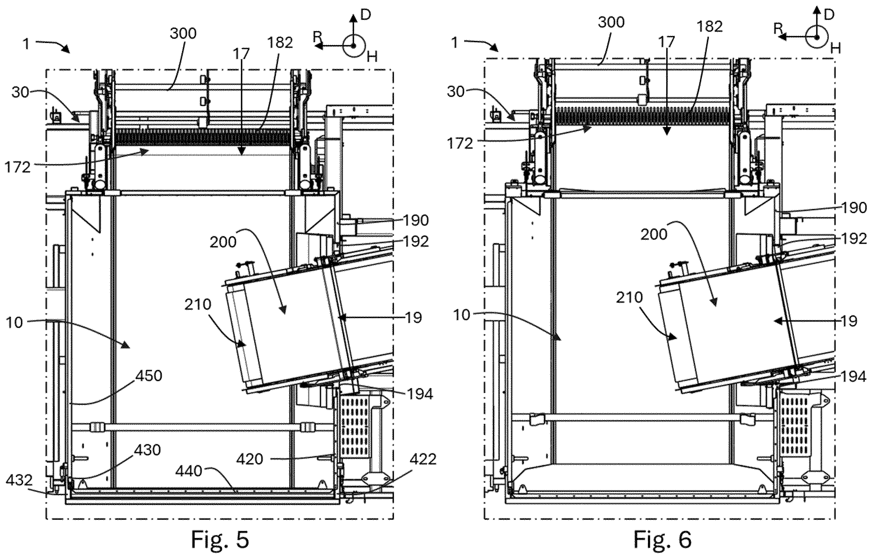

According to the embodiment illustrated in Fig. 1 to Fig. 4, the agricultural machine 1 comprises a movable bunker 10 which contains an inlet opening 19. As can be seen, the supplying conveying device 200 reaches into the bunker 10 via this inlet opening 19 at the location of the outlet side 210. As can be seen, in this case the inlet opening 19 is provided with two upright edges 192, 194 on either side of the supplying conveying device 200. Fig. 5 and Fig. 6 show these upright edges 192 in an enlarged fragment of Fig. 1 and Fig. 3, respectively. As is described below in more detail, the movement mechanism is configured in such a way that, when the movable bunker 10 is being displaced, for example between a first position illustrated in Fig. 1 and Fig. 2, and a second position, illustrated in Fig. 3 and Fig. 4, the displacement of the upright edges 192, 194 with respect to the supplying conveying device 200 along the transverse direction D is smaller than or equal to the threshold value. In other words, as can be seen, the displacement along the transverse direction D of these upright edges 192, 194 between the position illustrated in Fig. 1 and 2, and the position illustrated in Fig. 3 and 4 along the transverse direction is smaller than or equal to this threshold value. In other words, this limited displacement along the transverse direction D of the upright edges of the inlet opening 19 makes it possible for the supplying conveying device 200 to remain positioned in, or also through, this inlet opening 19 while the movable bunker 10 is being moved by means of the movement mechanism, preferably between the two limit positions of the movable bunker. Positioning the supplying conveying device 200 in such an inlet opening 19, as illustrated, makes it possible to position the top edge of the bunker 10 as high as possible within the acceptable limits for the maximum height of an agricultural machine 1, as it is not necessary for the supplying conveying device 200 to reach over the top edge of the bunker. It will be clear that in this way, the capacity, or in other words, the volume that is available for storing agricultural products in the bunker 10 is greater than if the supplying conveying device 200 would have to reach over the top edge of the bunker 10. Another advantage of an inlet opening 19 for the supplying conveying device 200 in this case is also that, for example when the bunker 10 is empty or only a limited volume of agricultural products is present in the bunker, the outlet side 210 can be positioned closer to the bottom of the bunker 10, thus reducing the drop height of the agricultural products which fall into the bunker 10 from the outlet side 210 of the supplying conveying device 200 and ensuring that the risk of damage of the agricultural products is also reduced.

As can be seen in Fig. 2 and Fig. 4, and as is clarified by means of Fig. 5 and Fig. 6, which show a fragment on an enlarged scale of Fig. 1 and Fig. 3, respectively, according to the illustrated exemplary embodiment, the maximum distance between an upright edge 192, 194 of the inlet opening 19 and an adjacent side 202, 204 of the supplying conveying device 200 is preferably kept as small as possible. This is advantageous since it allows the side wall 198 in which the inlet opening 19 is provided along the transverse direction to adjoin the adjacent sides 202, 204 of the supplying conveying device 200 as closely as possible. This reduces, for example, the risk of agricultural products escaping from the bunker 10 via this opening during filling of the bunker 10. In addition, this also makes it possible, in the case of the illustrated exemplary embodiment of a supplying conveying device 200 which is movable up and down, as described below in more detail, to keep the dimension along the transverse direction D of a movable screen 196 which closes off the inlet opening 19 underneath the supplying conveying device 200 as small as possible. This is advantageous since the forces to which such a screen 196 is subjected due to the presence of the agricultural products in the bunker 10 can be limited. According to the illustrated exemplary embodiment, this maximum distance along the transverse direction D is smaller than or equal to 5 cm. However, it will be clear that alternative embodiments are possible in which this maximum distance is, for example, smaller than or equal to 15 cm, preferably 10 cm. It will be clear that yet further alternative embodiments are possible in which this maximum distance is, for example, smaller than or equal to 10% of the width of the inlet opening 19, preferably 5% of the width of the inlet opening 19, or 10% of the width of the supplying conveying device 200, preferably 5% of the width of the supplying conveying device 200 at the location of the inlet opening 19. According to yet a further embodiment, it may be advantageous if this maximum distance is smaller than or equal to the minimum width of the desired root crop product.

According to the illustrated embodiment, the supplying conveying device 200 is movable up and down at the location of the inlet opening 19. This is advantageous as the discharge end 210 can thus be moved up and down in the bunker 10, for example in order to reduce the drop height of the agricultural products from the discharge end 210 until they fall into the bunker 10, depending on the filling level of the bunker 10. If the bunker is empty, for example, or essentially empty, the discharge end 210 may be positioned lower to the floor of the bunker 10, than when the bunker 10 has already been filled with agricultural products to a specific height. This makes it possible to reduce the drop damage of the agricultural products. As can be seen, the illustrated embodiment makes it possible for the supplying conveying device 200 to move up and down without coming into conflict with the boundaries of the inlet opening 19 along the transverse direction D, both in the position suitable for traveling on a public road, as illustrated in Figs. 1 and 2 and 5, also referred to as travelling position, and in the position suitable for harvesting by digging up, storing and/or unloading agricultural goods on a field, as illustrated in Figs. 3 and 4 and 6. In other words, a minimum distance is maintained between an upright edge 192, 194 of the inlet opening 19 and an adjacent side 202, 204 of the supplying conveying device 200 in every position of the supplying conveying device 200 which is movable up and down and guaranteed in every position of the movable bunker 10. According to the illustrated exemplary embodiment, this minimum distance is, for example, 1 cm, but it will be clear that alternative embodiments are possible in which this minimum distance is greater than or equal to 1mm or has any other suitable dimension.

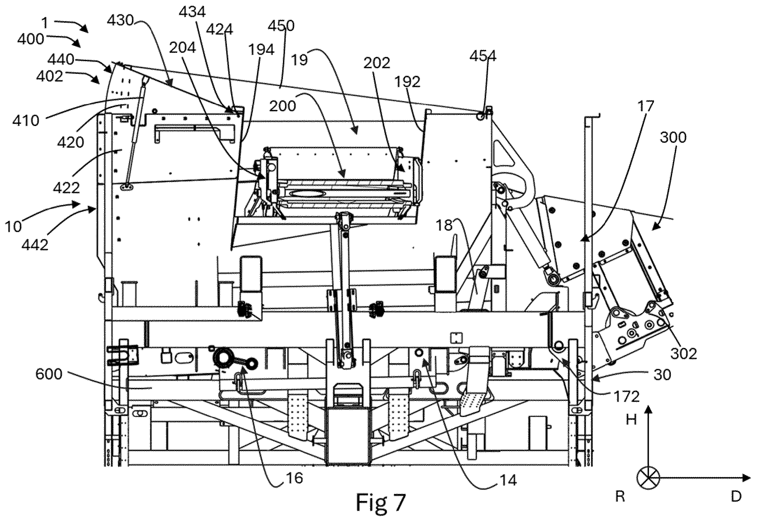

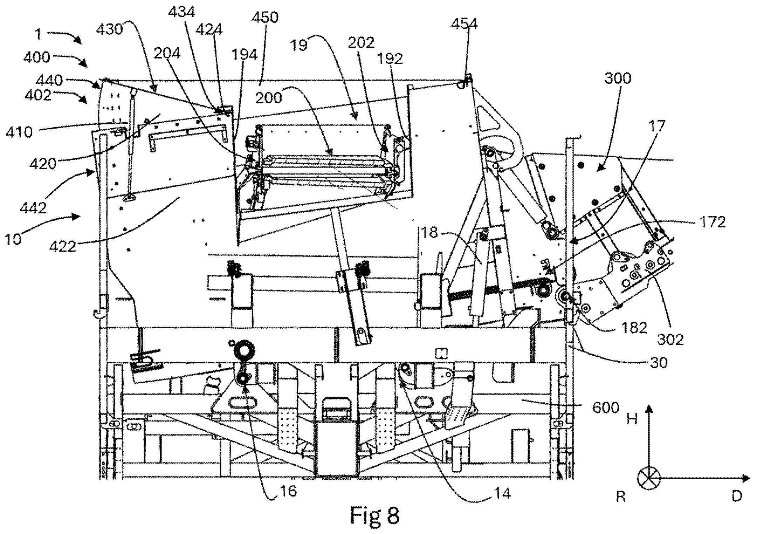

As can furthermore be seen in Fig. 1 to Fig. 6, as well as in Fig. 7 which shows a cross section along line VII-VII of Fig. 1 and Fig. 8 which shows a cross section along line VIII-VIII of Fig. 3, the movable bunker 10 of the illustrated embodiment comprises an outlet opening 17 via which the flow of agricultural products is discharged from the bunker 10 by means of the discharging conveying device 300. As will be described in more detail below, the movement mechanism causes a displacement of the movable bunker 10 which is greater at the location of the bottom 172 of the outlet opening 17 along the transverse direction D, than the displacement of the bunker 10 along the transverse direction D at the location of the supplying conveying device 200. According to the illustrated exemplary embodiment, the displacement at the location of the bottom 172 of the outlet opening 17 is, for example, 15 cm or more. However, it will be clear that alternative embodiments are possible in which this displacement is greater than, for example, 5cm, preferably 10 cm or more. In this case, it is advantageous for this displacement to be greater than the predetermined threshold value for the maximum displacement along the transverse direction D of the bunker 10 at the location of the supplying conveying device 200 as described above. This makes it possible to bring the discharging conveying device 300 closer to, for example, a cart, container, ... or any other suitable transport element positioned next to the agricultural machine 1, into which the root crop products can be transferred by means of the discharging conveying device 300. When the discharging conveying device 300 can be positioned closer to such a transport element, this makes it possible to operate, for example, higher carts, containers, ... with a reduced risk of root crop products being lost, since the discharging conveying device 300 can reach further over the edge of the cart, container, .... It also makes it possible to fill the cart, container, ... more efficiently and evenly as the discharging conveying device 300 can reach various spots in the cart, container more easily and can reach, for example, over the edge of the cart, container, ... into the cart in order to reduce the drop height, when the filling level of the cart, container, ... is still low, for example.

As can furthermore be seen in the illustrated embodiment, the movement mechanism 14, 16, 18 ensures that the movable bunker 10 is able to move between two limit positions. The first limit position suitable for travelling on a public road is illustrated in Figs. 1, 2, 5 and 7. The second limit position for harvesting by digging up, storing and/or unloading agricultural goods on a field in which the bunker 10 extends further along the transverse direction D than in the first limit position is illustrated in Figs. 3, 4, 6 and 8.

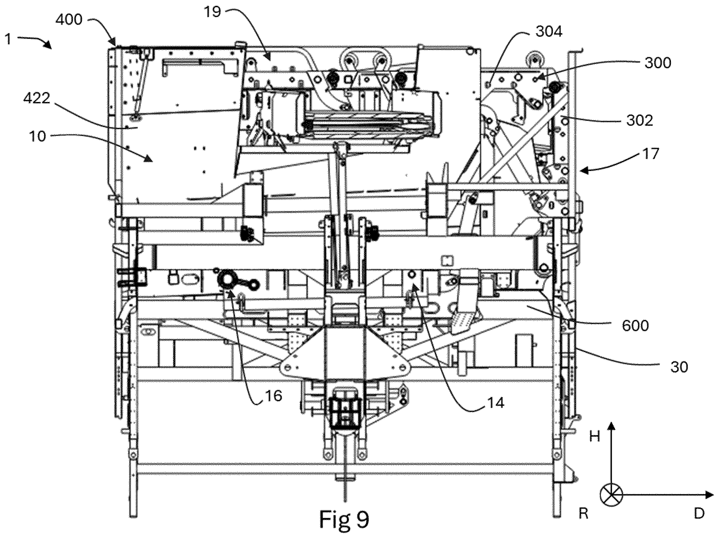

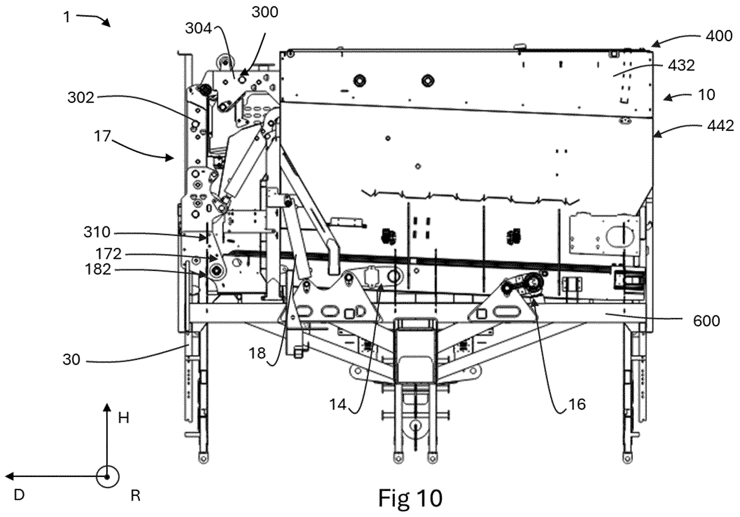

As can furthermore be seen, according to the illustrated embodiment, the discharging conveying device 300 is configured to be moved between a folded-out position for discharging the flow of agricultural goods, as is illustrated in Figs. 1 to 8, and a folded-in position for putting away the discharging conveying device 300 while the agricultural vehicle is travelling on public roads, as is illustrated in Figs. 9 and 10.

As is illustrated in Figs. 9 and 10, the bunker 10 and discharging conveying device 300, when in the folded-in position, are preferably in the first limit position within the legal limits for the dimensions of an agricultural machine 1 when travelling on public roads. As is furthermore illustrated in Figs. 3, 4, 6 and 8, the bunker 10 and the discharging conveying device 300, when in the folded-out position, are in the second limit position and outside the legal limits for the dimensions of an agricultural machine when travelling on public roads. In other words, the bunker 10 on the side of the discharging conveying device 300 reaches beyond the side wall 30 of the agricultural machine 1 along the transverse direction D which, in the first limit position, defines the outer limit of the agricultural machine, or, as can be seen, the side wall 30 of the machine which is situated underneath the discharging conveying device 300.

According to the illustrated exemplary embodiment, the discharging conveying device 300 furthermore also comprises two folding parts 302, 304. As can be seen in Fig. 9 and 10, these parts 302, 304 are inside the bunker 10 in their folded-in position. In the folded-out position, as illustrated in Figs. 1 to 8, the parts 302, 304 are at least partly outside the bunker 10. In this case, the first part 302 is situated in the outlet opening 17 or, in other words, it closes off this outlet opening 17 in its folded-in position. According to the illustrated exemplary embodiment, the first part is in this case in a vertical or essentially vertical position. As can furthermore be seen, the second part 304 is in this case folded down, so that it is in a horizontal or essentially horizontal position on the upper side of the bunker. It is advantageous in this case to position the supplying conveyor belt 200 in its lowest position, so that the second part 304 of the discharging conveying device 300 can reach over the downstream part 210 of the supplying conveying device 200, as can be seen. It is thus advantageous that the first part 302 of the discharging conveying device 300 has a length which is configured in such a way that, in the folded-in position, the maximum permitted height for an agricultural machine is not exceeded. It is thus also advantageous that the second part 304 of the discharging conveying device 300 has a length which, in the folded-in position, does not exceed the permitted width for an agricultural machine. As can furthermore be seen in, for example, Fig. 2 and Fig. 4, the most downstream part 304 of the illustrated embodiment of the discharging conveying device 300 comprises at least two tiltable segments 306, 308. It will be clear that by tilting the two tiltable parts 306, 308, the distance in the transverse direction D between the most downstream end 320 of the most downstream part 304 and the bunker 10 is adjustable. However, it will be clear that alternative embodiments are possible in which the discharging conveying device 300 comprises at least two folding parts 302, 304. Then, at least one of the parts 302, 304 is situated at least partly inside in the bunker 10 in its folded-in position, as can be seen, for example, in Fig. 9 and Fig. 10. In the folded-out position, the parts 302, 304 are at least partly outside the bunker 10, as can be seen, for example, in Fig. 2 and Fig. 4.

According to the illustrated exemplary embodiment, the bunker 10, as can be seen, comprises a bottom 11 whose angle of inclination α differs from the angle of inclination β of the discharging conveying device 300, in particular in the position suitable for an agricultural operation on the field, as illustrated, for example, in Fig. 3. In this case, it will be clear that the angle of inclination β of the discharging conveying device 300 can be adjusted, depending on, for example, the height of the cart, container, ... in which the agricultural goods have to be transported away. However, this angle of inclination β of the discharging conveying device 300 is preferably at most 30°, as this prevents the agricultural goods from flowing back as much as possible. However, it will be clear that alternative embodiments are possible in which this angle of inclination β of the discharging conveying device 300 is at most 60°, preferably at most 45°. As can be seen in the illustrated embodiment, the difference between the angle of inclination α of the bottom 11 of the bunker 10 and the angle of inclination β of the discharging conveying device 300 is more than 10°. However, it will be clear that alternative embodiments are possible in which this difference is at least 5°. Furthermore, it will be clear that the bottom 11 of the bunker 10 is configured in such a way that the angle of inclination α causes the bottom 11 of the bunker 10 to slope upwards, in the direction of the outlet opening 17 in the position illustrated in Fig. 3 or, in other words, the limit position in which the bunker 10 is tilted furthest to the side, in the direction of the outlet opening 17. This is also advantageous, as in this way the height of the bottom 172 of the outlet opening increases and the subsequent discharging conveying device 300 in its entirety is already in a higher position, as a result of which it can reach over the edge of a cart, container, ... more easily when transferring the agricultural goods. It is furthermore also advantageous because the agricultural goods are already being discharged on an upward incline in the direction of the discharging conveying device 300, as a result of which the difference between the incline of the bottom 11 of the bunker and the incline of the discharging conveying device 300 is reduced, resulting in a reduced risk of damage during the transfer and a reduced risk of impeding the flow of agricultural goods.

As can furthermore be seen, the illustrated embodiment of the movement mechanism comprises a mechanism of rods 14, 16 and an actuator 18 for moving the mechanism of rods 14, 16. In the illustrated embodiment, the mechanism of rods comprises a first movable rod 14 and a second movable rod 16. The first side of the first movable rod 14 and the first side of the second movable rod 16 are in this case tiltably connected to the chassis of the agricultural machine 1. The second side of the first movable rod 14 and the second side of the second movable rod 16 are in turn tiltably connected to the bunker 10. As can be seen, the actuator 18 is a linear actuator which is connected on one side to the bunker 10 and on the other side to the chassis of the agricultural machine 1. It will be clear that alternative embodiments of the actuator are possible in which the actuator 18 is configured to move the bunker 10 via the first 14 and second 16 movable rods. It will be clear that alternative embodiments of suitable mechanism of rods are also possible.

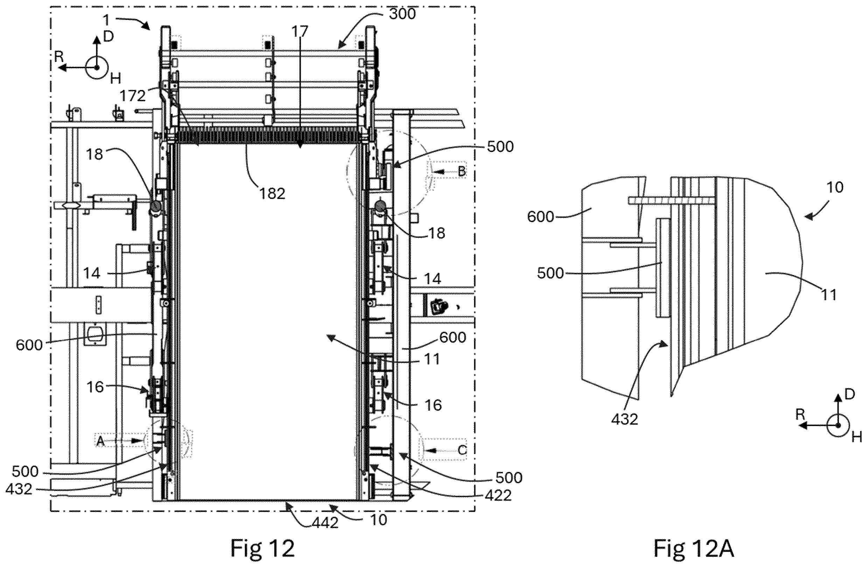

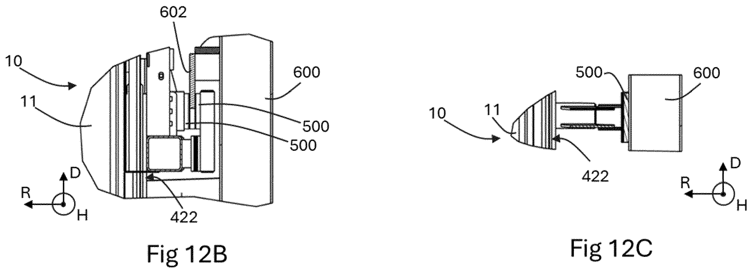

As can be seen in, for example, Fig. 12 and the fragments A, B and C which are illustrated on an enlarged scale in Figs. 12A, 12B and 1C, the illustrated embodiment of the agricultural machine 1 comprises four limiting elements 500. Two of the limiting elements 500 are arranged on the frame 600 of the agricultural machine 1, as illustrated in fragments A and C in Fig. 12. Two other limiting elements 500 are arranged on the movable bunker 10 by means of a suitable arm, as is illustrated in fragment B. According to the illustrated embodiment, the limiting elements 500 are designed, for example, as a plastic block. However, it is clear that alternative embodiments are possible which are made of a suitable damping material with a suitable sliding resistance, and/or which contain a suitable plastic block or consist of a plastic block. It will be clear that yet other alternative embodiments are possible, such as for example a suitable sliding bearing, a suitable metal surface which is provided with suitable lubrication, .... In this case, as is illustrated on an enlarged scale in Figs. 12A and 12C, the plastic block 500 is fixedly connected to the frame 600 of the agricultural machine 1 on one side and is brought into close contact with the movable bunker 10 on the other side. As can be seen in Fig. 12, these two limiting elements 500 are situated on either side of the movable bunker 10 along the direction of travel R. In this way, a forward and/or backward movement of the bunker 10 can be limited along the direction of travel R of the movable bunker 10. In a similar way, as can be seen in Fig. 12C, two limiting elements 500 are fixedly connected to the movable bunker 10 by means of an arm. These two limiting elements 500 are in close contact with the frame 600 of the agricultural machine by means of a supporting plate 602 which is fixedly connected to the frame of the agricultural machine 1. In a similar way, the two limiting elements 500 along the direction of travel are arranged on either side of this supporting plate 602, so that they can also limit a forward and/or backward movement of the bunker 10 along the direction of travel R. As can furthermore be seen, it will also be clear that the two limiting elements 500 of fragments A and C are arranged on the left-hand side of the agricultural machine 1, whereas the two limiting elements 500 of fragment C are arranged on the right-hand side of the agricultural machine 1. This also makes it possible to reduce the forces to which the movement mechanism 14, 16, 18 is subjected along the direction of travel R.

However, it will be clear that alternative embodiments of the agricultural machine 1 are possible in which any other suitable number of limiting elements 500 is fitted. These limiting elements 500 may also be fitted in any other suitable location in order to reduce the forward and/or backward movement of the bunker 10 of the agricultural machine 1 along the direction of travel R. It will be clear that, in this case, the limiting elements 500 do allow for the movable bunker 10 to be moved between the two limit positions along the transverse direction D. In other words, between the limit position suitable for travelling on public roads and the limit position suitable for harvesting by digging up, storing and/or unloading agricultural goods on a field.

As can be seen in the embodiment from Fig. 2 and Fig. 4, the movable bunker 10 comprises a bottom 11. According to the illustrated embodiment, the bottom 11 is formed as a transport element in the form of a conveyor belt. However, it will be clear that alternative embodiments of the bottom 11 are possible, such as for example any suitable bottom inclined in the direction of the outlet opening 17, or a bottom which comprises any suitable transport element for moving the agricultural goods in the direction of the outlet opening 17. As has already been described and illustrated above, the movable bunker 10 comprises an outlet opening 17. As illustrated, the most downstream part of the bottom 11 of the bunker 10 in this case forms the bottom 172 of the outlet opening 17. The discharging conveying device 300 extends from an inlet side 310 to an outlet side 320. The illustrated discharging conveying device 300 is designed as a sieve belt which can receive the flow of agricultural goods from the bunker on its inlet side 310 and deliver these on its outlet side 320 into a nearby cart, container, ... or any other suitable storage element or transport element. As can furthermore be seen, the inlet side 310 of the discharging conveying device 300 is arranged at the bottom 172 of the outlet opening 17 of the bunker 10. In other words, in the folded-out position of the discharging conveying device 300, the inlet side 310 is close to the bottom 172 of the outlet opening of the bunker 10 in order to receive a flow of agricultural goods from the bunker 10. As can furthermore be seen in this folded-out position of the discharging conveying device 300, a cleaning zone 180 is provided between the bottom 172 of the outlet opening 17 and the inlet side 310 of the discharging conveying device 300. According to the illustrated exemplary embodiment, this cleaning zone 182 comprises a cleaning roller 182 for at least partly removing soil, leaves and/or undesirable elements from the flow of agricultural products. However, it will be clear that alternative embodiments of such a cleaning zone 180 between the discharging conveying device 300 and the outlet opening 17 of the bunker 10 are possible or, in other words, according to the illustrated exemplary embodiment, between a transport element in the bottom 11 of the bunker 10 and a transport element of the discharging conveying device 300. As can be seen, the illustrated cleaning roller 182 is designed in such a way that the diameter changes along the longitudinal direction. According to the illustrated embodiment, this is achieved by means of adjoining segments or discs of varying diameter or, in other words, a stepwise change in diameter. However, it will be clear that alternative embodiments are possible in which , for example, a structure, elevation, recess, ... is provided on the cleaning roller. According to the illustrated exemplary embodiment, it is advantageous if wiping fingers 184 guide soil, leaves and/or undesirable elements in the direction of the cleaning roller 182, so that they can be discharged by the cleaning roller 182. According to alternative embodiments, the cleaning zone 180 comprises and/or consists of one or more of the following elements: one or more cleaning elements; one or more cleaning rollers 182; one or more cleaning rollers 182 of a changing diameter along the longitudinal direction and/or cleaning elements provided thereon; one or more sieve elements; one or more sieve openings; one or more wiping fingers 184; one or more wiping fingers 184 configured to guide soil, leaves and/or undesirable elements in the direction of one or more cleaning rollers 182, sieve elements and/or sieve openings.

As can furthermore be seen in the position illustrated in Fig. 4, in other words according to the illustrated embodiment comprising the discharging conveying device 300 in a folded-out position and in which the movable bunker 10 is in a limit position, in which the bunker 10 is outside the legal limits for the dimensions of an agricultural machine while travelling on a public road, the illustrated cleaning zone 180 forms tumble steps 186 configured to cause the flow of agricultural products to perform a tumbling movement in order to at least partly loosen and/or remove soil, leaves and/or undesirable elements. In other words, the cleaning roller 182 and the bottom 172 of the outlet opening 17 are situated in a higher position than the supply side 310 of the discharging conveying device 300.

As can furthermore be seen in Fig. 4, which shows the bunker in a limit position for harvesting by digging up, storing and/or unloading agricultural goods on a field, the inlet side 310 of the discharging conveying device 300 is situated on the outer side of a side wall 30 of the agricultural machine 1 situated underneath the latter along the transverse direction D. This ensures that discharged undesirable elements end up in the cleaning zone 180 next to the agricultural machine 1 and cannot accumulate on the elements of the agricultural machine situated underneath the latter. However, it is clear that alternative embodiments are possible in which the inlet side 310 of the discharging conveying device 300 and/or at least a portion of the cleaning zone 180 is situated on the outer side of the side wall 30 of the agricultural machine 1 situated underneath the latter along the transverse direction D. As is illustrated in Fig. 2, which shows the bunker in a limit position for travelling on a public road, or as is illustrated in Figs. 9 and 10, in which the discharging conveying device 300 is in a position in which it is at least partly folded into the bunker, the cleaning zone 180 does not extend beyond the side wall 30 of the agricultural machine 1 situated underneath the latter along the transverse direction D.

As can furthermore be seen, in particular in Figs. 2, 4, 7 and 8, the illustrated embodiment of the movable bunker 10 comprises raisable side walls 400. As illustrated, the raisable side walls 400 are operatively connected to an actuator 410, in the form of a gas spring, in order temporarily to increase the height of at least a portion of the side walls 400 of the bunker 10. According to the illustrated exemplary embodiment, the raisable side walls 400 comprise a tiltable unit 420. As can be seen, this tiltable unit comprises a first side panel 420 which is arranged so as to be tiltable on a first side 422 of the bunker 10 in which the inlet opening 19 for the supplying conveying device 200 is provided. The tiltable unit 402 furthermore comprises a second side panel 430 which is arranged so as to be tiltable on a second side 422 of the bunker 10, opposite the first side 422. The tiltable unit 402 furthermore also comprises a third side panel 440 which is positioned on the side 442 of the bunker 10 opposite the outlet opening 17 of the bunker 10. As can be seen, this third side panel 440 connects the first side panel 420 and the second side panel 430 at their ends facing away from the tilting point 424, 434. It will furthermore be clear that the first, second and third side panel together form a single-part tiltable unit which tilts about the tilting points 424, 434 which are arranged in such a way that their rotating shafts are in line with each other. As can furthermore be seen, the tiltable unit 402 furthermore also comprises a fourth side panel 450 which is tiltably arranged on the second side 422 of the bunker 10. In this case, the tilting point 454 of the fourth side panel 450 is arranged closer to the outlet opening 17 of the bunker 10, in other words closer than the tilting point 434 of the second side panel 430. In order to couple the fourth side panel 450 to the second side panel 430, so that they move upwards together by means of the actuator 410, a suitable sliding coupling is provided. However, it will be clear that alternative embodiments are possible. According to the illustrated embodiment, the actuator 410 is arranged in the form of a gas spring in such a way that it moves the raisable side walls 400 upwards, as illustrated, for example, in Figs. 7 and 8. The raisable side walls 400 can be moved down by the discharging conveying device 300, as illustrated, for example, in Figs. 9 and 10. To this end, the discharging conveying device 300 is connected to the at least one raisable side walls 400 so that, when in a raised position, the at least one raisable side walls 400 are lowered when the discharging conveying device 300 is being folded in. This may be achieved, for example, by the discharging conveying device 300 coming into contact with a stop or projection of the raisable side wall 400 when it is being folded in. However, it will be clear that numerous variant embodiments are possible. Thus, the unit may for example comprise one or more other suitable actuators 410, such as for example a pneumatic actuator, a hydraulic actuator, an electrical actuator, a linear actuator, a rotating actuator, an electrical motor, ... instead of a gas spring. According to further alternative embodiments, such an actuator may also be configured to move the raisable side walls 400 up and/or down.

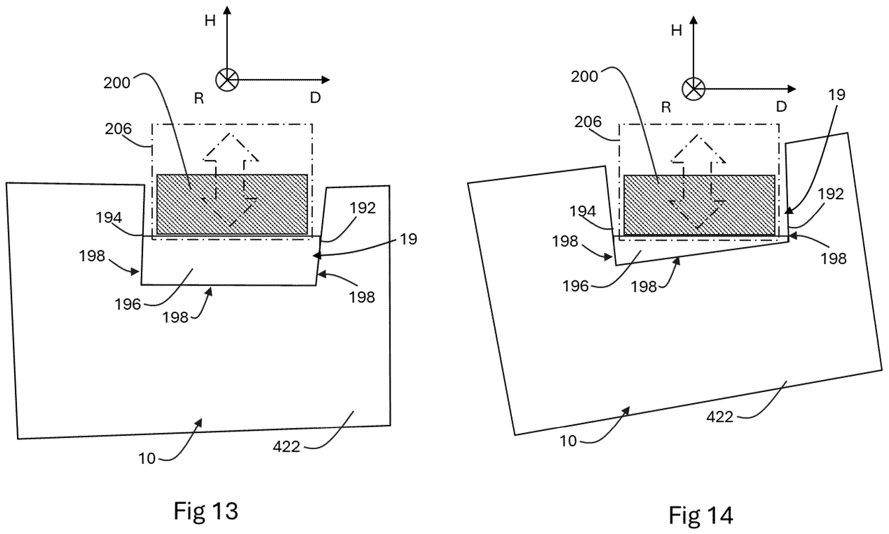

It is furthermore clear that, in addition to the above-described agricultural machine, the aspect of the method for moving a movable bunker 10 of the agricultural machine has also been explained, in which the action of the movement mechanism 12, 14, 18 on the movable bunker 10 causes a displacement of the bunker 10 which is smaller at the location of the supplying conveying device 200 along the transverse direction D than a predetermined threshold value, so that the outlet side 210 of the supplying conveying device 200 can continue to reach into the bunker 10 during the movement of the bunker 10 between two limit positions. Fig. 13 and Fig. 14 are a diagrammatic illustration of an embodiment and a position similar to that of Fig. 7 and Fig. 8, respectively. In this case, it will be clear that, according to the illustrated embodiment, in both limit positions of the movable bunker 10, in particular the first limit position illustrated in Fig. 13 and the second limit position as illustrated in Fig. 14, the circumference 198 of the inlet opening 19 does not interfere with the supplying conveying device 200 at the location of the inlet opening 19. In the illustrated exemplary embodiment, in which the supplying conveying device 200 as described above is movable up and down, the supplying conveying device 200 covers a movement range 206 at the location of the inlet opening 19, as illustrated diagrammatically by means of the dash-dotted line. In this case, it is clear that, according to such an embodiment, the circumference 198 of the inlet opening 19 does not interfere with the supplying conveying device 200 at the location of the inlet opening 19, in particular in the second limit position, as illustrated, for example, in Fig. 14. In this case, it will be clear that the circumference of the inlet opening 19 according to the illustrated embodiment is formed by the upright edges 192, 194 and the bottom edge of the inlet opening 19.

It will be clear that further variants and combinations of aspects and/or embodiments described herein are possible without departing from the scope of protection as defined in the claims.

## Claims

1. Agricultural machine (1) which is configured to temporarily store and unload root crop products, wherein the agricultural machine has a transverse direction (D) transversely to the direction of travel (R) of the agricultural machine (1), and wherein the agricultural machine (1) furthermore comprises:
- a bunker (10) for at least temporarily storing the agricultural products,
- a supplying conveying device (200) for supplying a flow of agricultural products to the bunker, wherein the supplying conveying device (200) is provided with an outlet side (210) which reaches into the bunker (10);
- a discharging conveying device (300) for discharging a flow of agricultural products from the bunker (10),
**CHARACTERIZED IN THAT**
the bunker (10) is arranged so as to be movable, and wherein the agricultural machine (1) furthermore comprises a movement mechanism (14, 16, 18), wherein the movement mechanism acts on the movable bunker (10) in order to cause a displacement of the bunker (10) which at the location of the supplying conveying device (200) along the transverse direction (D) is smaller than a predetermined threshold value, so that it is possible that the outlet side (210) of the supplying conveying device (200) can continue to reach into the bunker (10) during movement of the bunker (10) between two limit positions.

2. Agricultural machine according to Claim 1, wherein the movable bunker (10) comprises an inlet opening (19) via which the supplying conveying device (200) reaches into the bunker (10) at the location of the outlet side (210), and wherein the inlet opening (19) is provided with two upright edges (192, 194) on either side of the supplying conveying device (200), and wherein the displacement of the upright edges (192, 194) with respect to the supplying conveying device (200) along the transverse direction (D) during the movement of the bunker (10) is smaller than or equal to the threshold value.

3. Agricultural machine according to Claim 2, wherein the threshold value and/or the maximum distance between an upright edge (192, 194) of the inlet opening (19) and an adjacent side (202, 204) of the supplying conveying device (200) is equal to or smaller than one or more of the following dimensions:
- 10% of the width of the inlet opening (19), and/or 5% of the width of the inlet opening (19);
- 10% of the width of the supplying conveying device (200), and/or 5% of the width of the supplying conveying device (200) at the location of the inlet opening (19);
- 15 cm, and/or 10 cm, and/or 5 cm;
- the minimum width of the desired root crop product.

4. Agricultural machine according to one or more of the Claims 2 or 3, wherein the supplying conveying device (200) is movable up and down at the location of the inlet opening (19), and wherein the minimum distance between an upright edge (192, 194) of the inlet opening (19) and an adjacent side (202, 204) of the supplying conveying device (200) in every position of the supplying conveying device (200) which is movable up and down and in every position of the movable bunker (10) is greater than or equal to one or more of the following dimensions:
- 1mm;
- 1cm.

5. Agricultural machine according to one or more of the preceding claims, wherein the movable bunker (10) comprises an outlet opening (17) via which the flow of agricultural products is discharged from the bunker (10) by means of the discharging conveying device (300), and wherein the movement mechanism (14, 16, 18) acts on the movable bunker (10) in order to cause a displacement of the bunker (10) which, at the location of the bottom (172) of the outlet opening (17) along the transverse direction (D), is greater than:
- the displacement along the transverse direction (D) of the bunker (10) at the location of the supplying conveying device (200);
- 5 cm, and/or 10 cm, and/or 15 cm; and/or
- the predetermined threshold value.

6. Agricultural machine according to one or more of the preceding claims, wherein:
- the movement mechanism (14, 16, 18) is configured to move the movable bunker (10) between a first limit position suitable for travelling on a public road and a second limit position for harvesting by digging up, storing and/or unloading agricultural goods on a field, wherein the bunker (10) extends further along the transverse direction (D) than in the first limit position;
- the discharging conveying device (300) is configured to be moved between a folded-in position for putting the discharging conveying device away when the agricultural vehicle travels on public roads and a folded-out position for discharging the flow of agricultural goods;
- in the first limit position, when they are in the folded-in position, the bunker (10) and the discharging conveying device (300) meet the legal limits for the dimensions of an agricultural machine (1) while travelling on a public road;
- in the second limit position, when they are in the folded-out position, the bunker (10) and the discharging conveying device (300) do not meet the legal limits for the dimensions of an agricultural machine (1) while travelling on a public road; and/or
- wherein the discharging conveying device (300) consists of at least two folding-out and folding-in parts (302, 304), wherein:
- in the folded-in position, at least one of the parts (302, 304) is at least partly situated in the bunker (10);
- in the folded-out position, the parts (302, 304) are situated at least partly outside the bunker (10); and/or
- the most downstream part (304) comprises at least one tiltable segment (306, 308), wherein the distance between the most downstream end (310) of the most downstream part (304) and the bunker (10) in the transverse direction (D) is adjustable by tilting the at least one tiltable part (306, 308).

7. Agricultural machine according to one or more of the preceding claims, wherein the bunker (10) comprises a bottom (11), wherein:
- the angle of inclination (α) of the bottom (11) of the bunker (10) differs from the angle of inclination (β) of the discharging conveying device (300);
- the angle of inclination (β) of the discharging conveying device (300) is at most 60°, and/or at most 45°, and/or at most 30°; and/or
- the difference between the angle of inclination (α) of the bottom (11) of the bunker (10) and the angle of inclination (β) of the discharging conveying device (300) is at least 5°, and/or at least 10°.

8. Agricultural machine according to one or more of the preceding claims, wherein the movement mechanism comprises:
- a mechanism of rods and an actuator (18) which are configured to move the mechanism of rods; and/or
- a mechanism of rods comprising at least a first movable rod (14) and a second movable rod (16), wherein a first side of the first movable rod (14) and a first side of the second movable rod (16) are tiltably connected to the chassis of the agricultural machine (1), and wherein a second side of the first movable rod (14) and a second side of the second movable rod (16) are tiltably connected to the bunker (10); and an actuator (18), wherein the actuator (18) is configured to move the bunker (10) via the first and second movable rods (14, 16).

9. Agricultural machine according to one or more of the preceding claims, wherein the agricultural machine (1) furthermore comprises limiting elements (500) which are configured for:
- limiting the forward and/or backward movement of the bunker (10) along the direction of travel (R) of the agricultural machine (1); and
- allowing a movement of the bunker (10) between two limit positions along the transverse direction (D).

10. Agricultural machine (1) according to Claim 9, wherein the limiting elements (500) comprise a plastic block, or consist of a plastic block, which is fixedly connected to the frame (500) of the agricultural machine (1) on one side and is brought into close contact with the movable bunker (10) on the other side, or vice versa, in order thus to limit a forward and/or backward movement of the movable bunker (10) along the direction of travel ^{®}.

11. Agricultural machine according to one or more of the preceding Claims 7 to 10, wherein:
- the movable bunker (10) comprises an outlet opening (17), wherein the most downstream part of the bottom (11) of the bunker (10) forms the bottom (172) of the outlet opening (17); and
- the discharging conveying device (300) is provided with an inlet side (310) and an outlet side (320), wherein the inlet side (310) of the discharging conveying device (300) is arranged at the location of the bottom (172) of the outlet opening (17) of the bunker (10); and
- a cleaning zone (180) is provided between the bottom (172) of the outlet opening (17) and the inlet side (310) of the discharging conveying device (300) for at least partly removing soil, leaves and/or undesired elements from the flow of agricultural products.

12. Agricultural machine according to Claim 11, wherein the cleaning zone (180) comprises and/or consists of one or more of the following elements:
- one or more cleaning elements;
- one or more cleaning rollers (182);
- one or more cleaning rollers (182) having a changing diameter along the longitudinal direction and/or cleaning elements fitted thereto;
- one or more sieve elements;
- one or more sieve openings;
- one or more wiping fingers (184);
- one or more wiping fingers (184) configured for guiding soil, leaves and/or undesirable elements in the direction of one or more cleaning rollers (182), sieve elements and/or sieve openings.
- one or more tumble steps (186) configured to cause the flow of agricultural products to perform a tumbling movement in order to at least partly loosen and/or remove soil, leaves and/or undesirable elements, and/or
wherein the cleaning zone (180) is configured in such a way that:
- when the bunker is in a limit position for harvesting by digging up, storing and/or unloading agricultural goods on a field, the inlet side (310) of the discharging conveying device (300) and/or at least a portion of the cleaning zone (180) is situated along the transverse direction (D) on the outer side of a side wall (30) of the agricultural machine (1) situated underneath the former;
- when the bunker is in a limit position for travelling on a public road and/or when the discharging conveying device (300) is in a position where it is at least partly folded into the bunker, the cleaning zone (180) does not extend further along the transverse direction (D) than a side wall (30) of the agricultural machine (1) situated underneath it.

13. Agricultural machine according to one or more of the preceding claims, wherein the movable bunker (10) is furthermore provided with at least one raisable sidewall (400) and at least one actuator (410) which is operatively connected to the at least one raisable side wall (400) in order to temporarily raise the height of at least a portion of the at least one raisable side wall (400).

14. Agricultural machine according to Claim 13, wherein:
- the at least one raisable side wall (400) comprises a tiltable unit (402), wherein the tiltable unit (402) comprises:
- a first side panel (420) which is arranged so as to be tiltable on a first side (422) of the bunker (10) in which an inlet opening (19) is provided for the supplying conveying device (200);
- a second side panel (430) which is arranged so as to be tiltable on a second side (422) of the bunker (10) opposite the first side (422); and
- a third side panel (440) which is positioned on the side (442) of the bunker (10) which is opposite the outlet opening (17) of the bunker (10), wherein the third side panel (440) connects the first side panel (420) and the second side panel (430) at their end (426, 436) facing away from the tilting point (424, 434); and/or
- a fourth side panel (450) which is arranged so as to be tiltable on the second side (422) of the bunker (10), wherein the tilting point (454) of the fourth side panel (450) is provided closer to the outlet opening (17) of the bunker (10) than the tilting point (434) of the second side panel (430), and/or wherein the fourth side panel (450) is coupled to the second side panel (430) in order to at least partly move upwards together;
- the at least one actuator (410) comprises or consists of one or more of the following elements: a pneumatic actuator, a gas spring, a hydraulic actuator, an electrical actuator, a linear actuator, a rotating actuator, an electrical motor;
- the at least one actuator (410) is configured to move the at least one raisable side walls (400) up and/or down; and/or
- the discharging conveying device (300) is foldable and connected to the at least one raisable side walls (400) in such a way that, when the latter is in a raised position, the at least one raisable side walls (400) are lowered when the discharging conveying device is being folded in (300).

15. Method for moving a movable bunker (10) of the agricultural machine according to one or more of the preceding claims, wherein the method comprises the following step: - the movement mechanism (12, 14, 18) acts on the movable bunker (10) in order to cause a displacement of the bunker (10) which at the location of the supplying conveying device (200) along the transverse direction (D) is smaller than a predetermined threshold value, so that it is possible for the outlet side (210) of the supplying conveying device (200) to continue to reach into the bunker (10) during the movement of the bunker (10) between two limit positions.
